# EUROPEAN PATENT APPLICATION

(11) **EP 4 848 224 A1**
(43) Date of publication of application: **02.12.2026**
(21) Application number: 25179089.5
(22) Date of filing: 27.05.2025
(51) Int. Cl.: G06V 10/774, G06V 10/82, G06V 20/64, G06V 10/764

(54) **METHOD AND SYSTEM FOR PROJECTION-BASED LABELING OF ANATOMICAL SUBSTRUCTURES**

(71) Applicant: Siemens Healthineers AG, 91301 Forchheim (DE)
(72) Inventor: Kraus, Martin, 90763 Fürth (DE); Gulsun, Mehmet Akif, Princeton, 08540 (US)
(74) Representative: Siemens Healthineers Patent Attorneys

(57) **Abstract**

The present disclosure provides a computer-implemented method for labeling anatomical substructures of an anatomical structure in a medical imaging dataset. The method includes receiving a three-dimensional (3D) segmentation (31) of anatomical substructures, projecting the 3D segmentation onto a two-dimensional (2D) surface to create a projected 2D image (20) with pixels with at least one channel indicating presence of the anatomical substructures, processing the projected 2D image using a trained 2D image-to-image neural network (35) to generate label probabilities for pixels of the projected 2D image corresponding to the anatomical substructures, projecting the label probabilities from pixels of the projected 2D image to voxels of the anatomical substructures in the 3D segmentation, and determining a label set for the anatomical substructures by applying a post-processing step (37) to the label probabilities.

## Description

### Technical field of the invention

The present disclosure relates to medical image processing and analysis, and more particularly to systems and methods for automatic labeling of coronary vessels in medical imaging data using a projection-based approach.

### Background of the invention

In the field of cardiac imaging and analysis, automatic evaluation of coronary vessels based on computed tomography (CT) or computed tomography angiography (CTA) images of the heart is an important task for diagnosis, treatment planning, and patient monitoring (independent of the grammatical term usage, individuals with male, female or other gender identities are included within the term). Identifying and labeling detected coronary vessels with their proper anatomical names is crucial for accurate reporting and clinical decision-making. Current approaches to coronary vessel labeling utilize various image processing and machine learning techniques to analyze the complex three-dimensional (3D) structure of the coronary arteries.

Prior approaches to coronary vessel labeling have utilized 3D image-to-image techniques, which process volumetric data directly. One such approach is disclosed in the published application EP 4 242 980 A1. While effective, these methods typically require significant computational resources due to the large input/output volumes and complex network architectures needed for processing 3D data. As a result, these approaches often lead to relatively long processing times, with a typical CPU runtime of approximately 10 seconds per case. This can limit their practical application in clinical workflows, especially in scenarios requiring real-time feedback or processing of large datasets.

Additionally, in interactive centerline editing scenarios, where clinicians may need to modify vessel paths, current techniques rely on simple heuristics such as continuing from an already set parent segment label or requiring the user to manually choose labels for edited points. These approaches either lack accuracy or interrupt workflow efficiency, potentially leading to errors or delays in the analysis process.

### Object of the invention

It has been appreciated that a method is needed that overcomes one or more of these problems.

### Solution according to the invention

In a first aspect, a computer-implemented method for labeling anatomical substructures of an anatomical structure in a medical imaging dataset is provided. The method comprises: receiving a three-dimensional (3D) segmentation of anatomical substructures in the medical imaging dataset; projecting the 3D segmentation onto a two-dimensional (2D) surface to create a projected 2D image, wherein the projected 2D image comprises pixels with at least one channel indicating presence of the anatomical substructures; processing the projected 2D image using a trained 2D image-to-image neural network to generate label probabilities for pixels of the projected 2D image corresponding to the anatomical substructures; projecting the label probabilities from the pixels of the projected 2D image to voxels of the anatomical substructures in the 3D segmentation; and determining a label set for the anatomical substructures by applying a post-processing step to the label probabilities.

This method enables efficient and accurate labeling of anatomical substructures by transforming the 3D labeling problem into a computationally less demanding 2D image processing task, while maintaining the ability to generate accurate 3D labels through back-projection and post-processing.

The method may further comprise receiving predetermined labels for at least some of the anatomical substructures in the 3D segmentation and combining the predetermined labels with the projected label probabilities prior to determining the label set.

This feature allows the method to incorporate existing labels, such as those provided by a user or from a previous analysis, enhancing the flexibility and applicability of the labeling process in various scenarios, including interactive editing sessions.

The method may further comprise enforcing the predetermined labels in the final label set. Enforcing predetermined labels ensures that user-provided or previously validated labels are preserved in the final output, maintaining consistency with existing annotations and respecting expert input.

The predetermined labels may be input by a user in a centerline editing session. This feature enables seamless integration of the labeling method with interactive editing workflows, allowing users to modify and refine vessel centerlines while automatically updating labels for the modified structures.

The at least one channel of the projected 2D image may further comprise one or more of: a branch labels channel identifying distinct anatomical substructures; a distance channel encoding distance information from a reference point to respective points on the anatomical substructures; a centerline distance channel encoding distances from respective points to at least one anatomical landmark; and intensity values from the medical imaging dataset interpolated onto the 2D surface.

Including additional channels in the projected 2D image provides richer contextual information to the neural network, potentially improving labeling accuracy and robustness across various anatomical configurations.

Projecting the 3D segmentation onto the 2D surface may comprise mapping the 3D segmentation onto a convex closed surface corresponding to the anatomical structure, such as a spherical surface. Using a convex closed surface for projection simplifies the transformation process because it then involves casting a line through a suitable central point inside the volume enclosed by the convex closed surface and through a point (voxel) of the 3D segmentation, where the point where said line crosses the surface indicates the mapping to the surface. Using a convex closed surface ensures that every voxel will have a mapping. Using a spherical surface as the convex closed surface is a further simplification of the mapping, while still effectively capturing the overall structure of many anatomical features, particularly in cardiac imaging applications.

The method may further comprise encoding, in the projected 2D image, a distance from points on the surface of the anatomical structure to corresponding points on the convex closed surface. Alternatively, a distance from points on the surface of the anatomical structure to some central point, for example a center of gravity of the anatomical structure can be encoded. Encoding the distance information helps account for deviations from the approximation due to the projection to a surface, allowing the method to adapt to variations in actual anatomical shape and improve labeling accuracy for structures that deviate from the shape of the surface.

The trained 2D image-to-image neural network may comprise one of: a U-net architecture or a vision transformer architecture. Utilizing established neural network architectures like U-net or vision transformers leverages state-of-the-art image processing techniques, potentially improving the accuracy and efficiency of the labeling process. Other 2D image-to-image neural networks, in particular deep learning neural networks, may be used as well.

The anatomical structure may be a heart and the anatomical substructures may comprise coronary vessels. Applying the method specifically to heart structures and coronary vessels demonstrates its practical utility in cardiac imaging analysis, a critical area of medical diagnostics and treatment planning.

The method may involve projecting the coronary vessels onto a sphere, with the sphere centered on the center of gravity of the pericardium surface. This approach may provide a consistent reference point for the projection across different patients. The method may also include aligning the projection along an axis defined by two key anatomical landmarks: the Aortic Valve Center and the Left Ventricle Apex. This alignment may help standardize the orientation of the projected data, potentially improving the consistency and accuracy of the subsequent labeling process. By using these anatomical reference points, the method may account for variations in heart size, position, and orientation, which may enhance the robustness of the labeling system across diverse patient populations.

The 2D-to-2D image processing neural network may have been trained using a dataset comprising projected 2D images derived from 3D segmentations of anatomical substructures and corresponding ground truth labels for the anatomical substructures, wherein the ground truth labels are assigned using a 3D-to-3D image processing neural network, by human labeling, or using a combination of 3D-to-3D image processing neural network labelling and human labeling.

This training approach ensures that the neural network learns from high-quality, diverse data, potentially improving its generalization capabilities and accuracy across various anatomical configurations and imaging conditions.

The post-processing step may comprise applying a consistency post-processing to ensure anatomical coherence of the label set. Consistency post-processing helps eliminate anatomically impossible or unlikely label assignments, improving the overall accuracy and reliability of the labeling results.

The consistency post-processing may utilize a ruleset of anatomical interrelationships between the anatomical substructures to determine the label set. Incorporating anatomical knowledge through a ruleset allows the method to leverage domain-specific constraints, potentially reducing errors and improving the biological plausibility of the generated labels.

In a second aspect, a system for labeling anatomical substructures of an anatomical structure in a medical imaging dataset is provided. The system comprises: a storage module configured to store a three-dimensional (3D) segmentation of anatomical substructures in the medical imaging dataset; and a labeling module configured to: project the 3D segmentation onto a two-dimensional (2D) surface to create a projected 2D image, wherein the projected 2D image comprises pixels with at least one channel indicating presence of the anatomical substructures; process the projected 2D image using a trained 2D image-to-image neural network to generate label probabilities for pixels of the projected 2D image corresponding to the anatomical substructures; project the label probabilities from the pixels of the projected 2D image to voxels of the anatomical substructures in the 3D segmentation; and determine a label set for the anatomical substructures by applying a post-processing step to the label probabilities.

This system provides a hardware implementation of the labeling method, enabling efficient and accurate anatomical structure labeling in clinical and research settings, potentially improving workflow efficiency and diagnostic accuracy.

The system may be further configured to implement the features of any one of the method aspects described above.

In a third aspect, a computer program product comprising instructions that, when executed by a processor, cause the processor to perform a method for labeling anatomical substructures of an anatomical structure in a medical imaging dataset according to any one of the method aspects described above is provided.

The computer program product enables widespread deployment and integration of the labeling method into existing medical imaging software and workflows, potentially improving accessibility and adoption of the technology in clinical and research environments.

### Brief description of the drawings

Fig. 1a illustrates an orthogonal view of a heart, according to an embodiment of the disclosure.
Fig. 1b illustrates a section view of a heart showing a spherical approximation approach for coronary vessel projection, according to an embodiment of the disclosure.
Fig. 1c illustrates a two-dimensional projection view showing coronary vessel structures mapped onto a projected 2D image, according to an embodiment of the disclosure.
Fig. 1d illustrates a schematic view of a coronary vessel tree structure showing branch segments and bifurcation points, according to an embodiment of the disclosure.
Fig. 2a shows a two-dimensional data projection representing coronary vessel data, according to an embodiment of the disclosure.
Fig. 2b illustrates a two-dimensional projection view showing a branch label channel of projected vessel data, according to an embodiment of the disclosure.
Fig. 2c illustrates a two-dimensional projection view showing target branch labels of projected vessel data, according to an embodiment of the disclosure.
Fig. 3 illustrates a block diagram of a labelling system for processing cardiac data, according to an embodiment of the disclosure.
Fig. 4 illustrates a block diagram of a post-processing system for coronary vessel labeling, according to an embodiment of the disclosure.
Fig. 5a illustrates a block diagram of an image processing system using a U-net architecture, according to an embodiment of the disclosure.
Fig. 5b illustrates a block diagram of an image processing system using a vision transformer, according to an embodiment of the disclosure.
Fig. 6a illustrates a block diagram of a medical image processing system with scanning and storage modules, according to an embodiment of the disclosure.
Fig. 6b illustrates a block diagram of a medical image processing system with labelling and editing modules, according to an embodiment of the disclosure.
Fig. 7 illustrates a confusion matrix showing the performance of the coronary vessel labeling system, according to an embodiment of the disclosure.
Fig. 8 illustrates an orthogonal view of a heart representation showing various coronary vessel branches and their anatomical labels, according to an embodiment of the disclosure.

### Description of the preferred embodiments

The present disclosure relates to a method and system for labeling anatomical substructures of an anatomical structure in a medical imaging dataset. In particular, the method and system are designed for labeling coronary vessels of a heart in cardiac imaging data.

The coronary labeling system receives a three-dimensional segmentation of anatomical substructures from medical imaging data as input. The system then processes this input through several stages to generate labeled anatomical substructures as output.

A key feature of the system is the projection of the three-dimensional segmentation onto a two-dimensional surface. This projection step transforms the complex three-dimensional labeling problem into a more computationally efficient two-dimensional image processing task.

The projected two-dimensional image is then processed using a trained neural network to generate label probabilities for the anatomical substructures. These probabilities are subsequently projected back onto the original three-dimensional segmentation.

A post-processing step is applied to the label probabilities to determine the final label set for the anatomical substructures. This step ensures anatomical consistency and coherence in the labeling results. This post-processing step may be applied after the back-projection. However, it can also be done before the back-projection. In case another neural network is involved in the post-processing, or if the post-processing is particularly computationally expensive in 3D, performing the postprocessing in 2D will yield additional performance increases.

The method can be implemented as a computer program product comprising instructions that, when executed by a processor, cause the processor to perform the labeling of anatomical substructures. This allows for efficient and automated processing of medical imaging datasets.

The system is designed to handle both fully automatic labeling of unlabeled data and interactive relabeling scenarios where some labels may already be assigned. This flexibility makes the system suitable for various clinical workflows and applications in cardiac imaging analysis.

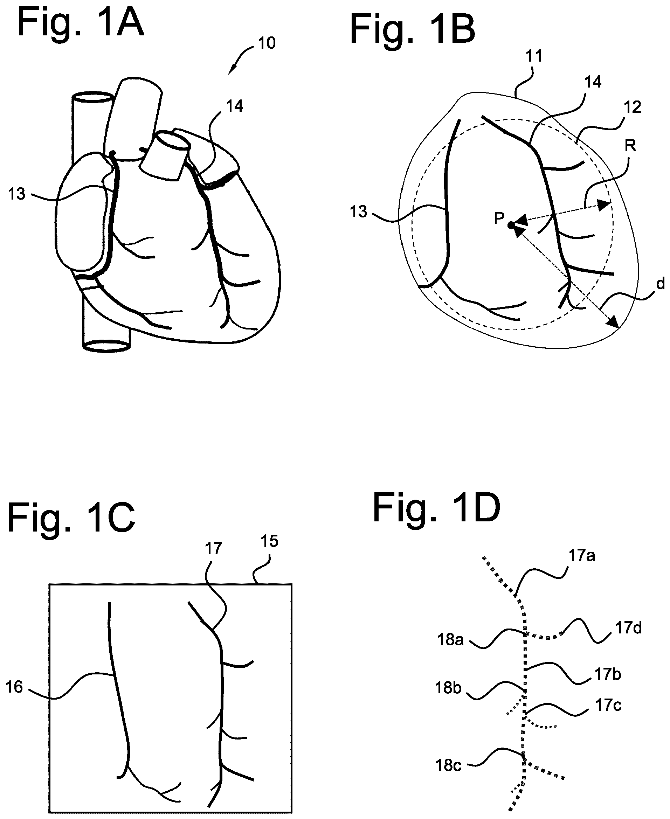

The method and system for labeling anatomical substructures of an anatomical structure in a medical imaging dataset can be applied to various anatomical structures, including a heart 10. FIG. 1a illustrates an orthogonal view of a heart 10, showing various anatomical features including coronary vessels. The right coronary 13 and left main coronary 14 are indicated in the figure.

To facilitate efficient processing of three-dimensional (3D) coronary vessel data, the method employs a projection technique that transforms the 3D vessel structures into a two-dimensional (2D) surface. This projection is based on a spherical approximation of the heart surface.

FIG. 1b illustrates a section view of a heart 10 demonstrating the spherical approximation approach. A surface of heart 11 is shown along with a spherical approximation of heart surface 12. The spherical approximation of heart surface 12 serves as a reference geometry for projecting the 3D coronary vessel structures onto a 2D surface.

A first coronary branch (the previously indicated right coronary 13) and a second coronary branch (the left main coronary 14) are depicted on the surface of heart 11. These coronary branches represent examples of the anatomical substructures to be labeled by the method.

The spherical approximation of heart surface 12 is characterized by a radius of spherical approximation R, measured from a center point to the approximated surface. To account for variations between the actual heart surface and the spherical approximation, a distance d from a point on the heart surface to the center of sphere may be encoded. The difference between the radius R and the distance d, d-R, represents the variation between points on the surface of heart 11 and corresponding points on the spherical approximation of heart surface 12, with positive values of d-R indicating heart surface points that are outside the volume enclosed by the sphere and negative values of d-R indicating points that are inside the volume enclosed by the sphere. This approach can be generalized to arbitrary 2D surfaces, by calculating the distance between the 3D coordinate of a point on the heart surface to the 3D coordinate of the projection onto the 2D surface, and assigning points outside the surface a positive distance and points inside the surface a negative distance (or vice versa).

By mapping the 3D segmentation of the coronary vessels onto the spherical approximation of heart surface 12, the method transforms the complex 3D labeling problem into a more computationally efficient 2D image processing task. The projected 2D image includes information about the presence of anatomical substructures, such as the first coronary branch 13 and second coronary branch 14.

As was mentioned, the distance (e.g. d-R) from points on the surface of heart 11 to corresponding points on the spherical approximation of heart surface 12 can be encoded in the projected 2D image. This encoding provides additional spatial information that may be useful for accurate labeling of the anatomical substructures.

While a spherical approximation is described, the two-dimensional projection of the heart surface can alternatively use an oval or other shape approximation instead of a spherical approximation. If the basic shape more closely matches the actual shape of the heart, then the importance of encoding deviations through e.g. a channel encoding distance is reduced. The choice of projection shape may depend on the specific geometry of the heart being analyzed and the requirements of the labeling task.

FIG. 1c illustrates a two-dimensional projection view showing coronary vessel structures mapped onto a projected 2D image. The figure depicts a two-dimensional projection of heart surface 15, which serves as a background for the projected vessel structures. A two-dimensional projection of a first coronary branch 16 is shown extending across the projection surface. Additionally, a two-dimensional projection of a second coronary branch 17 appears in the projection, representing another vessel structure mapped from three-dimensional space onto the two-dimensional surface.

The projections of these coronary branches 16, 17 maintain their relative spatial relationships while being represented in a simplified two-dimensional format, allowing for more efficient processing of the vessel structures. The two-dimensional projection of heart surface 15 provides context for the location and orientation of the projected coronary vessels. This approach is possible if the substructures of interest, such as coronary vessels, are located on a surface in this case the surface of the heart anatomical structure) and preferably do not cross each other though it is possible to encode information relating to crossing vessels in a channel on the 2D image).

In an exemplary method of projecting 3D coronary vessel structures onto a 2D surface, the heart meshes and vessels may be projected onto a sphere. The sphere may be centered on the center of gravity (COG) of the pericardium surface, which provides a consistent reference point for the projection. More generally, a 3D segmentation of anatomical substructures (for example, in the form of voxels) may be projected onto a 2D surface by casting a line through a suitable central point (such as the COG of the pericardium surface) inside the volume enclosed by the surface and through a point (voxel) of the 3D segmentation (e.g. the voxels of the pericardium surface), where the point where said line crosses the surface indicates the mapping to the surface. The surface can be curved or planar, and the surface can be closed (like a sphere or an ellipsoid), and the surface can be open (like a disc or a half-sphere). The surface can also comprise several non-connected components (for example, one could project on two parallel planes on both sides of the heart). The surface may be a convex closed surface, such as an ovoid, an ellipsoid, a prolate spheroid, or the aforementioned spherical surface. Using a convex closed surface surrounding a central point ensures that every voxel will have a mapping. The skilled person can come up with an appropriate coordinate system for the 2D surface, such as cartesian coordinates for planar surfaces and (modified) spherical coordinates (φ, θ), where φ represents the azimuthal angle in the xy-plane and θ represents the polar angle from the z-axis, for spherical, ellipsoidal or prolate spheroidal surfaces, where the modification of the spherical coordinates can introduce appropriate scaling factors to account for any different axes lengths.

The projection may be axis-aligned in the direction of two key anatomical landmarks: the Aortic Valve Center and the Left Ventricle Apex. By centering the projection on the pericardium surface COG, the method may account for variations in heart size and position within the chest cavity. This approach may help normalize the projection across different patients, potentially improving the consistency of the labeling process.

The axis alignment using the Aortic Valve Center and Left Ventricle Apex may provide a standardized orientation for the projected data. The Aortic Valve Center may serve as a reference point for the upper portion of the heart, while the Left Ventricle Apex may define the lower extent. This alignment may help maintain consistent spatial relationships between different coronary vessel segments in the 2D projection.

Using these anatomical landmarks for alignment may also facilitate the identification and labeling of specific coronary vessel segments, as their positions in the 2D projection may be more predictable relative to these key structures. For example, the left main coronary artery may typically appear near the projection of the Aortic Valve Center, while distal branches of the left anterior descending artery may extend towards the projection of the Left Ventricle Apex.

This projection method may allow for a more standardized representation of the coronary vessel structures across different patients, potentially improving the performance and generalizability of the subsequent 2D image processing and labeling steps. The resulting 2D projection, as illustrated in FIG. 1c, may preserve the topological relationships between different vessel segments while providing a computationally efficient format for further analysis.

FIG. 1d illustrates a schematic view of a coronary vessel tree structure showing branch segments and bifurcation points. The structure includes a coronary branch segment 17a, a coronary branch segment 17b, a coronary branch segment 17c, and a coronary branch segment 17d, which are interconnected through a coronary branch bifurcation point 18a, a coronary branch bifurcation point 18b, and a coronary branch bifurcation point 18c. The branch segments are represented by curved lines, while the coronary branch bifurcation points 18a, 18b, 18c are shown at locations where the branch segments meet and divide.

As was mentioned, the projected 2D image includes additional channels beyond just vessel presence. These channels may include:
1. A branch labels channel identifying distinct anatomical substructures, such as the coronary branch segments 17a, 17b, 17c, 17d, either by anatomical name or by a placeholder name for later labelling by the anatomical name.
2. A distance channel encoding distance information from a reference point to respective points on the anatomical substructures. This channel may incorporate the distance from heart surface to center of sphere (d) to account for variations in heart geometry.
3. Local distance metrics to account for the stretching involved in flattening a 2D manifold to a 2D flat surface
4. A centerline distance channel encoding distances from respective points to at least one anatomical landmark, such as the distance from each point to the ostium or to the first upstream bifurcation point.
5. Intensity values from the medical imaging dataset interpolated onto the 2D surface, which may include CTA intensities.
6. Where coronary branches cross each other, the encoding can make clear if this is a junction of multiple vessels (a "cross roads") or a point where two vessels cross each other but do not interconnect (a "bridge").

The two-dimensional image generation typically may use a resolution of 200x200, 224x224, 300x300, 400x400, 448x448, 500x500 pixels or other resolutions, which provides sufficient detail for accurate processing while maintaining computational efficiency. This resolution allows for clear representation of the coronary vessel structures and associated features in the projected 2D image. In the simplest form, a binary representation of vessel / non-vessel is provided, but in typical use cases floating point or integer values in one or multiple channels is provided, as indicated above. A 3D image for a 3D image to 3D image model with comparable results might work with a 224x224x224 set of voxels. Compared to a 448x448 2D image, the 3D image contains 56 times more data in this example.

By transforming the 3D segmentation into a 2D surface with multiple information channels, the method enables more efficient processing of the coronary vessel data while retaining spatial and anatomical information. This approach facilitates the subsequent steps of the labeling process, including the application of 2D image-to-image neural networks for generating label probabilities.

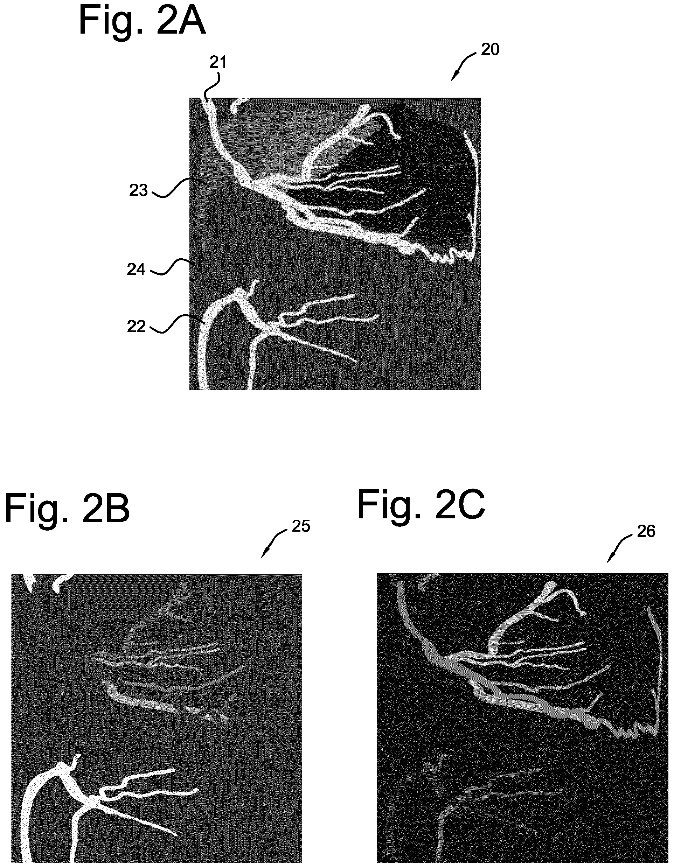

The method for labeling anatomical substructures of an anatomical structure in a medical imaging dataset involves creating a two-dimensional (2D) projection of the three-dimensional (3D) segmentation data. FIG. 2a illustrates an example two-dimensional data projection 20 that represents coronary vessel data projected onto a two-dimensional surface.

The example two-dimensional data projection 20 includes a first coronary branch 21 and a second coronary branch 22, which appear as white structures against a darker background. The projection illustrates how three-dimensional coronary vessel data can be transformed into a two-dimensional surface while maintaining the relative spatial relationships between vessel structures.

The example two-dimensional data projection 20 contains different types of pixels, including heart structure pixels 23 that represent cardiac tissue, and background pixels 24 that represent areas without vessel or cardiac tissue. The contrast between the coronary branches 21, 22 and the background pixels 24 allows for clear visualization of the vessel structures in the projected format.

The first coronary branch 21 appears in the upper portion of the projection with multiple branching segments, while the second coronary branch 22 is located in the lower portion with fewer branches. This representation demonstrates how the projection maintains the relative spatial relationships between vessel structures while reducing the dimensionality of the data.

The labeling module creates the projected 2D image with at least one channel indicating the presence of anatomical substructures. In this example, the white pixels representing the first coronary branch 21 and the second coronary branch 22 serve as a channel indicating the presence of these anatomical substructures.

Additional channels may be incorporated into the example two-dimensional data projection 20 to provide more information for the labeling process. For instance, a channel encoding the distance from heart surface to center of sphere may be included to account for variations in heart geometry. This information can be represented using color or intensity variations within the projected image.

The example two-dimensional data projection 20 facilitates the labeling process by transforming the complex 3D coronary vessel structure into a simplified 2D format. This transformation allows for more efficient processing of the vessel structures using 2D image-to-image neural networks, while retaining crucial spatial and anatomical information necessary for accurate labeling.

FIG. 2b illustrates a two-dimensional projection view showing a branch label channel of projected vessel data 25. The image displays different shades of gray, each indicating distinct vessel segments. This segmentation of branches prior to the projection to 2D may offer the advantage of explicitly keeping crossing segments separate. For instance, the branches crossing in the lower left quadrant of the image represent separate vessels, which is encoded in the branches having slightly different shades of gray in this representation.

The branch label channel may provide additional information for the labeling process. However, it is important to note that this channel is optional. In principle, it may be sufficient to provide an image that identifies the anatomical substructures (e.g., the vessels) without further segmentation or pre-labelling. The choice to include a branch label channel may depend on the specific requirements of the labeling task and the desired level of detail in the output. It may also depend on the available training data and quality thereof.

FIG. 2c illustrates a two-dimensional projection view showing target branch labels of projected vessel data 26. This image represents a potential outcome of the 2D to 2D processing, where each segment that will receive a unique label is depicted with a different shade of gray. This type of representation may serve as an example of ground truth data used in training the neural network.

The ground truth data shown in FIG. 2c may be generated through various methods. In some cases, it may be created by expert annotation, where experienced radiologists or cardiologists manually label each vessel segment in the 2D projection. Alternatively, it may be produced by projecting 3D labeled data onto the 2D surface, where the 3D labels have been obtained through previous processing or expert annotation. In some instances, a combination of automated pre-labeling followed by expert verification and correction may be employed to create accurate ground truth data efficiently.

The use of such ground truth data in training may allow the neural network to learn the mapping between the input 2D projections and the desired output labels. This approach may enable the network to generalize from the training examples and accurately label new, unseen coronary vessel projections in various anatomical configurations.

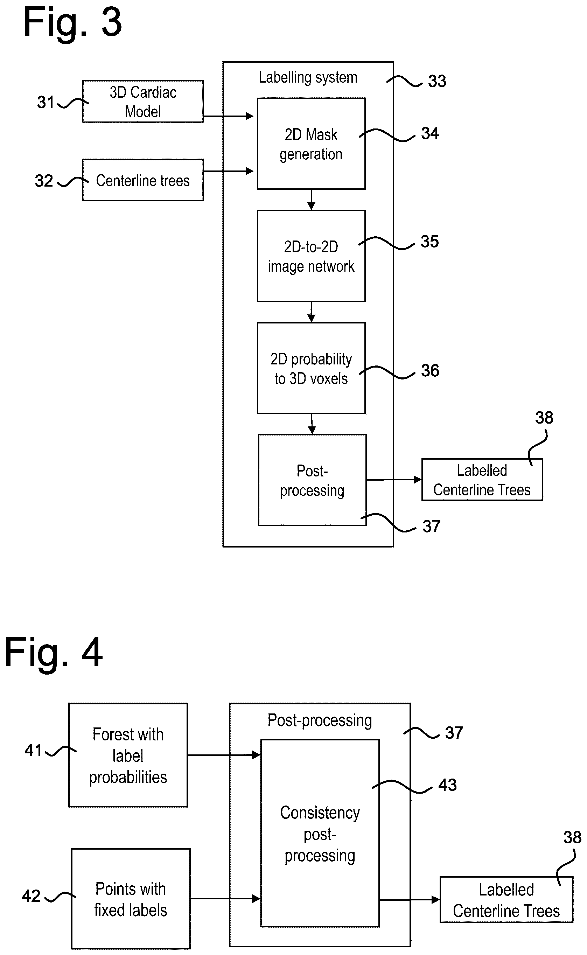

The labeling system architecture comprises several components that work together to process and label anatomical substructures in medical imaging data. FIG. 3 illustrates a block diagram of a labelling system 33 for processing cardiac data.

A three-dimensional cardiac model 31 and centerline trees 32 serve as inputs to the labelling system 33. As used herein, the term "cardiac model" may refer to a computational representation of the heart's anatomy and structure, potentially including information about the shape, size, and spatial relationships of cardiac chambers, blood vessels, and other relevant anatomical features. This model may be derived from medical imaging data and serve as a basis for further analysis and processing. Use of such a model is optional, but may improve the quality of the 3D to 2D mapping.

The term "centerline trees" may refer to a representation of vessel structures in three-dimensional space based on data as measured by e.g. a CTA scanner. This representation may include data indicating the central paths or axes of vessel segments, as well as information about vessel bifurcations and connectivity. In some aspects, centerline trees may comprise 3D data where vessels are distinguished from non-vessel structures. In other aspects, centerline trees may include more detailed classification of voxels, potentially indicating whether each voxel corresponds to a vessel segment, vessel bifurcation point, or other anatomical structure. The centerline trees may provide a simplified yet informative representation of the vessel network topology and geometry, which can be used for various analysis and processing tasks in medical imaging. The CTA scanner data may be obtained using X-ray computed tomography angiography techniques. Alternative imaging modalities that could provide data for generating centerline trees include magnetic resonance angiography (MRA), ultrasound, or optical coherence tomography (OCT).

The optional three-dimensional cardiac model 31 and centerline trees 32 are provided to a two-dimensional image generation component 34 within the labelling system 33. The two-dimensional image generation component 34 projects the three-dimensional segmentation onto a two-dimensional surface, creating a projected two-dimensional image, as has already been described in reference to figures 1c and 2.

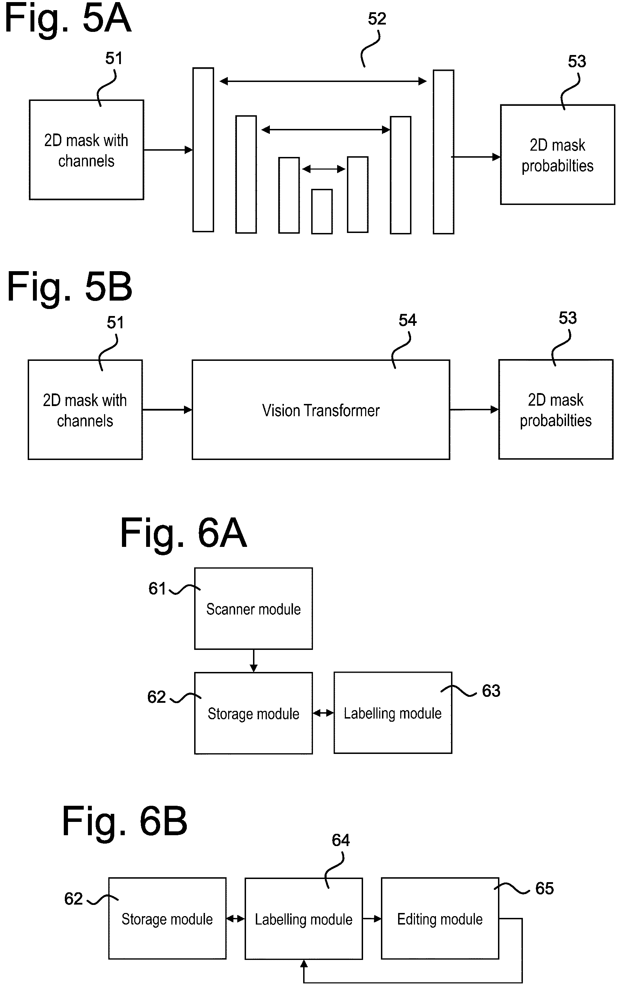

The projected two-dimensional image is then processed using a 2D-to-2D image network 35. This network is a trained two-dimensional image-to-image neural network that generates label probabilities for pixels corresponding to the anatomical substructures in the projected two-dimensional image. The 2D-to-2D image network 35 may incorporate various architectures suitable for image-to-image processing tasks (more on this in reference to figures 5a and 5b).

The 2D-to-2D image network 35 may be trained using a dataset comprising projected 2D images derived from 3D segmentations of anatomical substructures and corresponding ground truth labels for those substructures. In some aspects, the ground truth labels may be obtained through manual annotation by expert radiologists or cardiologists. Alternatively, the labels may be generated using a separate 3D-to-3D image processing neural network that has been previously trained on a large dataset of labeled 3D cardiac images. In some cases, a combination of automated labeling and human expert verification may be employed to create the training dataset. The training process may involve techniques such as data augmentation, transfer learning, and curriculum learning to improve the network's performance and generalization capabilities. By training on a diverse set of projected 2D images and their corresponding labels, the 2D-to-2D image network 35 may learn to accurately predict label probabilities for various coronary vessel configurations in the simplified 2D representation.

Following the 2D-to-2D image network 35, a 2D probability to 3D probability voxel projection component 36 projects the label probabilities from the pixels in the projected two-dimensional image back to voxels of the anatomical substructures in the three-dimensional segmentation. This step transforms the processed two-dimensional data back into the original three-dimensional space.

A post-processing component 37 then applies a post-processing step to the label probabilities to determine a label set for the anatomical substructures. The post-processing can be performed in three-dimensional coordinates after back-projecting from two-dimensional to three-dimensional, or alternatively in the two-dimensional projection space before back-projection. This flexibility allows for optimization based on specific requirements or computational considerations. The post-processing stage of the labeling system ensures consistency in the labeling results and produces the final labeled centerline trees.

The post-processing stage transforms the label probabilities generated by the neural network into a definitive set of anatomical labels. This process leverages a method that ensures anatomical consistency while maximizing alignment with the predicted probabilities.

The post-processing method operates on a tree-structured segmentation of the anatomical structure, where each section corresponds to an anatomical substructure. In an embodiment, the method incorporates two inputs: (1) for each section, a list of candidate labels and associated probabilities, and (2) a ruleset defining anatomical interrelationships between the substructures. The ruleset of anatomical interrelationships defines, for each possible parent label of a parent node in the tree-structured segmentation, one or more allowed labels for the child nodes of that parent node. This ruleset encodes anatomical knowledge about which label combinations are valid in adjacent vessel segments, preventing anatomically impossible label assignments.

The post-processing algorithm performs a selection of labels through a recursive walkthrough of the tree-structured segmentation. For each node in the tree-structure:
1. The algorithm obtains the label of the parent node
2. Based on the ruleset and parent label, it determines all allowed labels for the current node
3. From this list of allowed labels, all permutations are generated, resulting in a list of possible label assignments
4. This list is sorted by descending probability
5. A label for the current node is selected based on this sorted list
6. The algorithm recurses to child nodes until all sections have labels or the algorithm fails to find a valid solution

To handle cases where no valid solution exists under initial constraints, the algorithm may visit some sections multiple times with different label selections to determine multiple alternative solutions for the label set. The final solution may be selected based on the maximum global label likelihood given the label probabilities for each section.

It should be noted that this way of post-processing is but one way, and that other ways will be available to the skilled person.

The output of the labelling system 33 is provided as labelled centerline trees 38, which represent the final processed cardiac data with appropriate labels applied to the anatomical substructures.

This architecture enables efficient processing of three-dimensional cardiac data by leveraging two-dimensional image processing techniques, while maintaining the ability to generate accurate three-dimensional labels for anatomical substructures.

FIG. 4 illustrates a block diagram of a post-processing system for coronary vessel labeling.

A post-processing 37 receives input from a forest with label probabilities 41 and points with fixed labels 42. The forest with label probabilities 41 represents the label probabilities generated by the 2D-to-2D image network for the anatomical substructures. The points with fixed labels 42 represent predetermined labels for at least some of the anatomical substructures in the 3D segmentation, which may be input by a user in a centerline editing session.

The post-processing block 37 may function as outlined in reference to figure 3. Within the post-processing 37, a consistency post-processing 43 processes the inputs. The consistency post-processing 43 combines the label probabilities from the forest with label probabilities 41 with the fixed labels from points with fixed labels 42 to generate consistent labeling results. This combination step occurs prior to determining the final label set.

The consistency post-processing is for use in the interactive editing scenario, where some segments already have user-assigned labels and the post-processing method is modified to incorporate these fixed labels. This represents an extension to the above-described post-processing method, which did not specifically address partially labeled inputs.

The key modifications to the post-processing method for handling fixed labels may include:
1. User-assigned labels are treated as fixed inputs with probability 1.0 for the assigned label (equivalent to a one-hot distribution)
2. During the recursive walkthrough, when the algorithm encounters a section with a fixed label, it accepts this label without modification and does not consider alternative labels for that section
3. The probability distributions from the neural network and the fixed label distributions are combined (for example, by averaging) to provide input to the standard post-processing algorithm
4. Post-processing focuses particularly on determining label assignments at junctions where at least one connected segment lacks a label, further improving processing efficiency
5. The algorithm ensures that fixed labels are preserved in the final output, even if they would normally conflict with the ruleset constraints (with user-provided labels taking precedence)

This modified approach (which is but an example of the modification, other possibilities are available to the skilled person) maintains the benefits of the original post-processing method while adding support for interactive editing scenarios where user input must be preserved. The projection-based approach significantly accelerates this process compared to the prior 3D approach, enabling near real-time feedback during interactive editing sessions.

Generally, the consistency post-processing 43 may utilize a ruleset of anatomical interrelationships between the anatomical substructures to determine the label set. This ruleset encodes knowledge about valid label combinations for adjacent vessel segments, preventing anatomically impossible label assignments. In scenarios where some vessel segments have user-assigned labels that must be preserved, the consistency post-processing 43 incorporates these fixed labels as constraints during the labeling process. The system enforces the predetermined labels in the final label set, ensuring that user-provided labels take precedence even if they would normally conflict with the ruleset constraints.

The labeling system can thus handle both completely unlabeled data and partially labeled data with fixed user assignments. In an interactive editing scenario, the system can process a deletion case where some previously labeled segments are removed. The consistency post-processing 43 can focus on determining label assignments only at junctions where at least one segment lacks a label in these interactive editing scenarios, improving processing efficiency.

As was mentioned before, the output from the post-processing 37 is provided as labeled centerline trees 38, which represent the final processed cardiac data with appropriate labels applied to the anatomical substructures. The labeled centerline trees 38 maintain anatomical coherence while maximizing alignment with the predicted probabilities and preserving any user-assigned fixed labels.

FIG. 5a illustrates a block diagram of an image processing system utilizing a U-net architecture. The system includes a two-dimensional image with channels 51 at the input side, which is processed through a U-net 52. The U-net 52 comprises multiple processing blocks of decreasing and then increasing size, with bidirectional connections between corresponding levels as indicated by the horizontal arrows. The output of the system is a two-dimensional image with label probabilities 53.

The U-net 52 is designed to efficiently process the two-dimensional image with channels 51, which may include information such as the distance from heart surface to center of sphere. The network's architecture allows for the combination of low-level and high-level features through the bidirectional connections between corresponding levels. This enables the U-net 52 to capture both fine details and broader contextual information from the input image.

The processing blocks in the U-net 52 are arranged in a symmetric pattern, with the left side representing an encoding path where the spatial dimensions are progressively reduced, and the right side representing a decoding path where the dimensions are progressively increased. This structure allows the network to create a compact representation of the input data and then expand upon to generate detailed label probabilities.

**Table 1 shows an example U-Net architecture for processing a 400x400 2D image with 1 input channel:**

| **Layer** | **Output Size** | **Kernel Size** | **Stride** | **Channels** |
|---|---|---|---|---|
| Input | 400 x 400 | - | - | 1 |
| Conv1 | 400 x 400 | 3 x 3 | 1 | 64 |
| MaxPool1 | 200 x 200 | 2 x 2 | 2 | 64 |
| Conv2 | 200 x 200 | 3 x 3 | 1 | 128 |
| MaxPool2 | 100 x 100 | 2 x 2 | 2 | 128 |
| Conv3 | 100 x 100 | 3 x 3 | 1 | 256 |
| MaxPool3 | 50 x 50 | 2 x 2 | 2 | 256 |
| Conv4 | 50 x 50 | 3 x 3 | 1 | 512 |
| UpConv1 | 100 x 100 | 2 x 2 | 2 | 256 |
| Conv5 | 100 x 100 | 3 x 3 | 1 | 256 |
| UpConv2 | 200 x 200 | 2 x 2 | 2 | 128 |
| Conv6 | 200 x 200 | 3 x 3 | 1 | 128 |
| UpConv3 | 400 x 400 | 2 x 2 | 2 | 64 |
| Conv7 | 400 x 400 | 3 x 3 | 1 | 64 |
| Output | 400 x 400 | 1 x 1 | 1 | N |

In this example U-Net architecture, N in the output layer represents the number of label classes. The network may include additional features such as batch normalization, dropout, or different activation functions between layers, which are not explicitly shown in this table.

The exact architecture may be adjusted based on specific requirements of the coronary vessel labeling task and available computational resources.

FIG. 5b illustrates a block diagram of an alternative image processing system utilizing a vision transformer architecture. The system includes a two-dimensional image with channels 51 as input, which is processed through a vision transformer 54. The vision transformer 54 then outputs a two-dimensional image with label probabilities 53.

The vision transformer 54 processes the input data using self-attention mechanisms, allowing the network to capture long-range dependencies in the input image. This architecture may be particularly effective for capturing global relationships between different parts of the coronary vessel structure.

A vision transformer network suitable for processing 400x400 2D images in the context of coronary vessel labeling may be structured as follows:
1. Input Layer: The network may accept a 400x400 2D image with multiple channels, including vessel presence, distance metrics, and intensity values.
2. Patch Embedding: The input image may be divided into patches, for example, 16x16 pixel patches, resulting in 625 (25x25) patches. Each patch may be flattened and linearly projected to a specified embedding dimension, such as 768.
3. Position Embedding: A learnable position embedding may be added to the patch embeddings to retain spatial information.
4. Transformer Encoder: The embedded patches may be processed through multiple transformer encoder layers. Each encoder layer may consist of:
   - Multi-head self-attention mechanism
   - Layer normalization
   - Feed-forward neural network
   - Residual connections
      For example, the network may use 12 encoder layers with 12 attention heads each.
5. MLP Head: The output of the transformer encoder may be processed by a multi-layer perceptron (MLP) to generate the final label probabilities.
6. Output Layer: The network may output a 400x400 2D image with N channels, where N represents the number of possible vessel labels.

The vision transformer architecture may incorporate additional features such as:
- Dropout for regularization
- Layer-wise adaptive rate scaling (LARS) optimizer for training
- Gradient clipping to stabilize training
- Data augmentation techniques specific to medical imaging

The exact hyperparameters, such as the number of layers, embedding dimensions, and attention heads, may be adjusted based on the specific requirements of the coronary vessel labeling task and available computational resources. The architecture may be pre-trained on a large dataset of medical images before fine-tuning on the specific coronary vessel labeling task.

Both the U-net 52 and the vision transformer 54 are trained using a dataset comprising projected 2D images derived from 3D segmentations of anatomical substructures and corresponding ground truth labels for the anatomical substructures. The ground truth labels may be assigned using a 3D-to-3D image processing neural network, by human labeling, or using a combination of 3D-to-3D image processing neural network labeling and human annotation.

The training process enables the networks to learn the mapping between the 2D projected representations of the coronary vessels and their corresponding anatomical labels. By training on a diverse dataset of projected images and labels, the networks can generalize to new, unseen cases and accurately predict label probabilities for various coronary vessel configurations.

The output of both architectures is a two-dimensional image with label probabilities 53, which represents the predicted probabilities for each anatomical label at each pixel location in the 2D projection. These label probabilities are subsequently used in the post-processing stage to determine the final label set for the anatomical substructures.

The choice between the U-net 52 and the vision transformer 54 architectures may depend on factors such as the specific characteristics of the coronary vessel data, computational resources, and desired trade-offs between processing speed and accuracy. Both architectures offer advantages in processing the 2D projected data and can be effective in generating accurate label probabilities for the coronary vessel labeling task. However, other (deep learning) neural networks will also be available to the skilled person.

FIG. 6a illustrates a block diagram of a medical image processing system comprising a scanner module 61, a storage module 62, and a labelling module 63.

A scanner module 61 acquires medical imaging data of the anatomical structure, such as computed tomography angiography (CTA) images of the heart. The scanner module 61 may also acquire data from other imaging modalities such as magnetic resonance imaging (MRI), positron emission tomography (PET), single-photon emission computed tomography (SPECT), or ultrasound imaging systems. In some cases, the scanner module 61 may receive data from multiple imaging modalities and combine them to provide a more comprehensive view of the anatomical structure.

The scanner module 61 may also interface with external data sources such as picture archiving and communication systems (PACS), electronic health records (EHR), or other medical databases to retrieve relevant patient information or prior imaging studies. This may allow for longitudinal analysis or comparison with historical data.

In some implementations, the scanner module 61 may incorporate artificial intelligence or machine learning algorithms to enhance image quality, reduce noise, or perform preliminary segmentation of anatomical structures before passing the data to subsequent processing stages.

The scanner module 61 may also include capabilities for real-time imaging, such as fluoroscopy or interventional imaging systems, which can provide dynamic visualization of anatomical structures and may be particularly useful in certain cardiac procedures.

In addition to traditional medical imaging devices, the scanner module 61 may also integrate data from wearable devices, implantable sensors, or other continuous monitoring systems that provide physiological data relevant to cardiac function and vessel health.

The scanner module 61 connects to a storage module 62 through a unidirectional connection, allowing data flow from the scanner to storage.

The storage module 62 stores the processed imaging data received from the scanner module 61. The storage module 62 and a labelling module 63 are connected through a bidirectional connection, enabling data exchange between these components.

The labelling module 63 performs labeling operations on the stored data, such as identifying and labeling coronary vessels in medical images. The labelling module 63 may incorporate the functionality of the two-dimensional image generation, the 2D-to-2D image network, and the post-processing components described earlier.

FIG. 6b illustrates an expanded block diagram of the medical image processing system, including a storage module 62, a labelling module 64, and a centerline editing module 65 arranged in a sequential configuration.

The storage module 62 connects bidirectionally with the labelling module 64, allowing data exchange between these components. The labelling module 64 connects to the centerline editing module 65 to provide it (re)labelled data. Additionally, the centerline editing module 65 includes a feedback connection back to the labelling module 64.

The centerline editing module 65 enables modification of the labelled data and can send information back to the labelling module 64 for further processing. This feedback loop supports interactive editing scenarios where some vessel segments may have user-assigned labels that must be preserved, or where changes are made to the automatically segmented anatomical (sub)structures such as vessels.

The system implements features to handle both fully automatic labelling of unlabelled data and interactive relabelling scenarios. When processing unlabelled coronary data, the system projects the vessel structures onto a two-dimensional surface, processes this projection using the trained neural network to generate label probabilities, and applies post-processing to determine the final anatomical labels.

In interactive relabeling scenarios, the system preserves user-assigned labels while automatically determining appropriate labels for the remaining segments. The labelling module 64 may incorporate predetermined labels for at least some of the anatomical substructures in the 3D segmentation, which may be input by a user in a centerline editing session.

The system combines the predetermined labels with the projected label probabilities prior to determining the label set. The post-processing step enforces the predetermined labels in the final label set, ensuring that user-provided labels take precedence.

As was mentioned, the labelling module 64 may employ a U-net architecture, a vision transformer architecture, or another neural network for processing the projected two-dimensional image. The choice of architecture may depend on factors such as the specific characteristics of the coronary vessel data and desired trade-offs between processing speed and accuracy.

The system applies a consistency post-processing step to ensure anatomical coherence of the label set. This post-processing step utilizes a ruleset of anatomical interrelationships between the anatomical substructures to determine the label set.

By integrating these components and implementing these features, the system provides a solution for labelling anatomical substructures in medical imaging datasets, supporting both automatic processing and interactive editing scenarios.

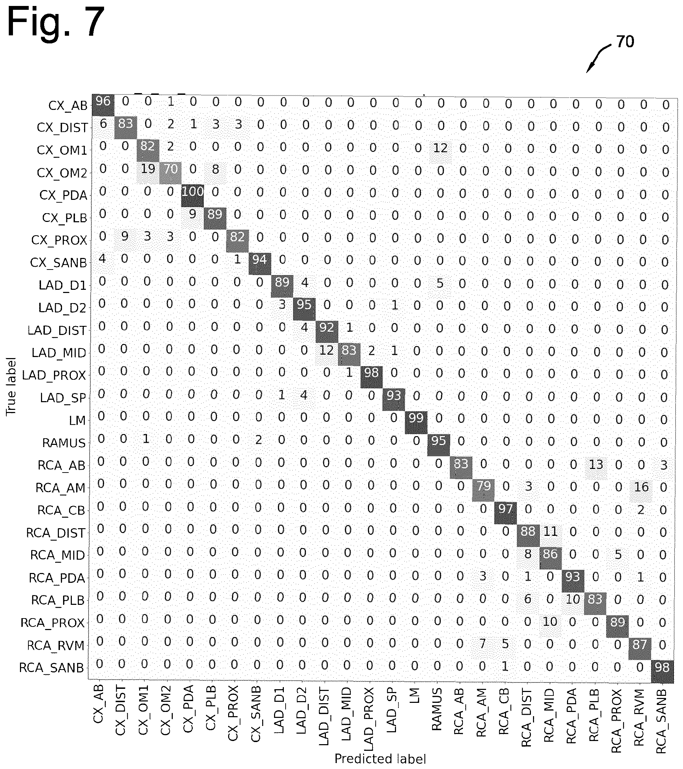

FIG. 7 illustrates a confusion matrix 70 showing the performance of the coronary vessel labeling system. The confusion matrix 70 displays the relationship between predicted labels (shown along the horizontal axis) and true labels (shown along the vertical axis) for various coronary vessel segments. The values in the matrix represent the percentage of correct classifications (along the diagonal) and misclassifications (off-diagonal elements) for different vessel segments.

The confusion matrix 70 demonstrates that the 2D projection-based approach achieves classification accuracy comparable to the more computationally expensive 3D image-to-3D image models, while requiring less processing time. The diagonal elements of the matrix show high percentages, indicating strong performance in correctly identifying many vessel segments. Some misclassifications may occur between anatomically adjacent or similar vessel segments, which is consistent with the performance characteristics of 3D-to-3D approaches. The test set comprised 104 images. The columns and rows do not exactly add up because not every label occurs in every test image.

The confusion matrix 70 includes the following coronary vessel labels:
Circumflex (CX) Artery Segments:
   - CX_AB: Circumflex Artery, Atrial Branch
   - CX_DIST: Circumflex Artery, Distal segment
   - CX_OM1: Circumflex Artery, First Obtuse Marginal branch
   - CX_OM2: Circumflex Artery, Second Obtuse Marginal branch
   - CXPDA: Circumflex Artery, Posterior Descending Artery
   - CX_PLB: Circumflex Artery, Posterolateral Branch
   - CX_PROX: Circumflex Artery, Proximal segment
   - CX_SANB: Circumflex Artery, Sinoatrial Nodal Branch
Left Anterior Descending (LAD) Artery Segments:
   - LAD_D1: Left Anterior Descending Artery, First Diagonal branch
   - LAD_D2: Left Anterior Descending Artery, Second Diagonal branch
   - LAD_DIST: Left Anterior Descending Artery, Distal segment
   - LAD_MID: Left Anterior Descending Artery, Middle segment
   - LAD_PROX: Left Anterior Descending Artery, Proximal segment
   - LAD_SP: Left Anterior Descending Artery, Septal Perforator branch
Other Left Coronary Artery Segments:
   - LM: Left Main coronary artery
   - RAMUS: Ramus Intermedius
Right Coronary Artery (RCA) Segments:
   - RCA_AB: Right Coronary Artery, Atrial Branch
   - RCA_AM: Right Coronary Artery, Acute Marginal branch
   - RCA_CB: Right Coronary Artery, Conus Branch
   - RCA_DIST: Right Coronary Artery, Distal segment
   - RCA_MID: Right Coronary Artery, Middle segment
   - RCA_PDA: Right Coronary Artery, Posterior Descending Artery
   - RCA_PLB: Right Coronary Artery, Posterolateral Branch
   - RCA_PROX: Right Coronary Artery, Proximal segment
   - RCA_RVM: Right Coronary Artery, Right Ventricular Marginal branch
   - RCA_SANB: Right Coronary Artery, Sinoatrial Nodal Branch

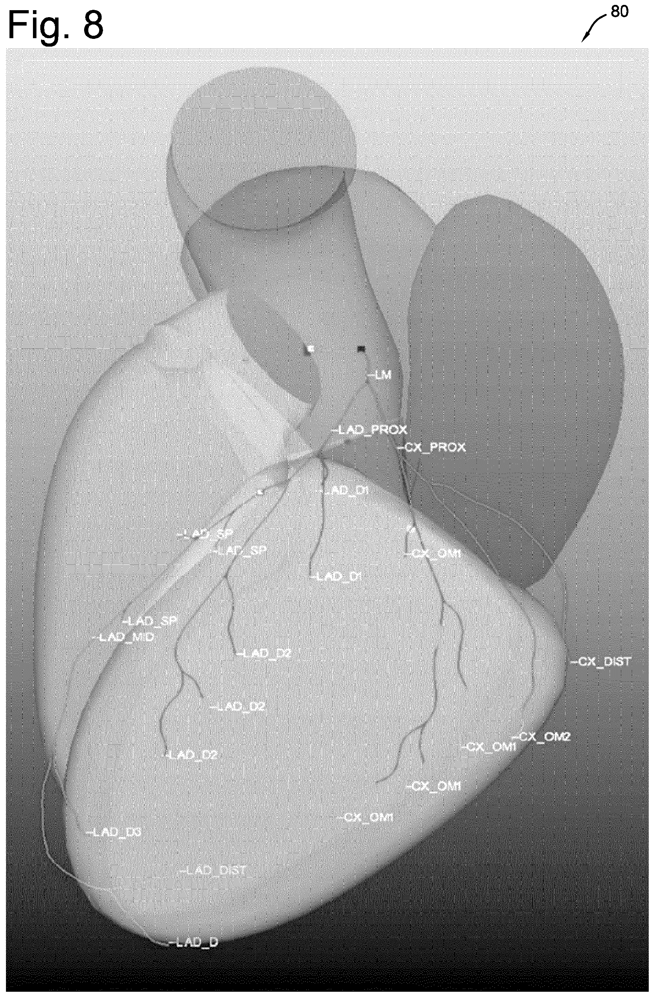

FIG. 8 illustrates an orthogonal view of a heart representation 80, showing various coronary vessel branches and their anatomical labels. The diagram depicts the coronary artery tree structure with labeled branches extending across the heart surface.

The first diagonal branch LAD_D1 extends from the left anterior descending artery region. The first obtuse branch CX_OM1 is shown branching from the circumflex artery area and extends along the lateral wall of the heart. The second diagonal branch LAD_D2 appears as another branch from the left anterior descending artery territory.

The second obtuse branch CX_OM2 extends from the circumflex artery region. The third diagonal branch LAD_D3 is positioned as a lower branch from the left anterior descending artery area. The branches are depicted with their anatomical relationships maintained, showing how they distribute across different regions of the heart representation 80.

The vessel branches are shown with their corresponding labels positioned adjacent to their respective locations on the heart representation 80. The diagram provides a clear visualization of the coronary vessel anatomy and the spatial relationships between the different branches.

This figure may represent an exemplary 3D output of labeled data according to the disclosure. The labeled coronary vessel branches demonstrate how the system's 2D projection-based approach can be effectively applied to generate accurate 3D labels for anatomical substructures. The clear delineation and labeling of different vessel segments showcase the system's ability to distinguish between various coronary artery branches and assign appropriate anatomical labels, which may be particularly useful for clinical interpretation and analysis.

The systems and methods described herein may be implemented in any form of computing or electronic device. The term "computer," as used herein, encompasses any device with processing capabilities sufficient to execute instructions. This includes, but is not limited to, personal computers, servers, mobile devices, personal digital assistants, and similar devices.

Such devices may include one or more processors, such as microprocessors, controllers, or other suitable types of processors, capable of executing instructions to control the device's operation. For example, in some implementations using a system-on-a-chip architecture, the processors may include fixed-function blocks (hardware accelerators) that perform parts of the method in hardware rather than software or firmware. Platform software, such as an operating system or similar, may be installed to support the execution of application software.

The described functionality may be implemented in hardware, software, or any combination thereof. When implemented in software, the instructions or code can be stored on or transmitted via a computer-readable medium. Such media include computer-readable storage media, which may be volatile or non-volatile, removable or non-removable, and implemented using any technology for storing information such as program code, data structures, or other data. Examples include, but are not limited to, ROM, EEPROM, RAM, magnetic or optical storage, flash memory, or any other storage medium accessible by a computer. Communication media that facilitate the transfer of software, such as via coaxial cables, fiber optics, DSL, or wireless signals, may also be considered part of computer-readable media.

Alternatively, or in addition, some or all of the described functionality may be implemented using hardware logic components. Examples include, but are not limited to, application-specific integrated circuits, system-on-a-chip systems, field-programmable gate arrays, application-specific standard products, and complex programmable logic devices. In some cases, software instructions may also be implemented in dedicated circuits, such as programmable logic arrays or digital signal processors.

The computing device may operate as a standalone system or as part of a distributed system, where tasks are performed collectively by multiple devices connected via a network. Such devices may communicate over a network connection to perform the described functionality. For instance, software may be stored on a remote computer and accessed by a local device, which may download and execute portions of the software as needed. Similarly, some instructions may be processed locally, while others may execute on remote systems or networks. In some cases, the computing device may be remote and accessible via a communication interface. Storage of program instructions may also be distributed across a network or stored in a combination of local and remote locations. For example, software may reside on a remote computer and be accessed by a local terminal, or the system may execute some software locally while other components operate on remote servers.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognize that numerous further modifications and combinations of various aspects are possible. Accordingly, the described aspects are intended to encompass all such alterations, modifications, and variations that fall within the scope of the appended claims.

## Claims

1. A computer-implemented method for labeling anatomical substructures of an anatomical structure in a medical imaging dataset, comprising:
receiving a three-dimensional, 3D, segmentation (31) of anatomical substructures in the medical imaging dataset;
projecting the 3D segmentation onto a two-dimensional, 2D, surface to create a projected 2D image (20), wherein the projected 2D image comprises pixels with at least one channel indicating presence of the anatomical substructures;
processing the projected 2D image using a trained 2D image-to-image neural network (35) to generate label probabilities for pixels of the projected 2D image corresponding to the anatomical substructures;
projecting the label probabilities from the pixels of the projected 2D image to voxels of the anatomical substructures in the 3D segmentation; and
determining a label set for the anatomical substructures by applying a post-processing step (37) to the label probabilities.

2. The method of claim 1, further comprising:
receiving predetermined labels (42) for at least some of the anatomical substructures in the 3D segmentation (31);
combining the predetermined labels (42) with the projected label probabilities prior to determining the label set.

3. The method of claim 2, further comprising:
enforcing the predetermined labels (42) in the final label set.

4. The method of claim 2 or 3, wherein the predetermined labels are input by a user in a centerline editing session.

5. The method of any one of claims 1-4, wherein the at least one channel of the projected 2D image (20) further comprises one or more of:
a branch labels channel identifying distinct anatomical substructures;
a distance channel encoding distance information from a reference point to respective points on the anatomical substructures;
a centerline distance channel encoding distances from respective points to at least one anatomical landmark; and
intensity values from the medical imaging dataset interpolated onto the 2D surface.

6. The method of any one of claims 1-5, wherein projecting the 3D segmentation (31) onto the 2D surface comprises mapping the 3D segmentation onto a convex closed surface corresponding to the anatomical structure, such as a spherical surface (12).

7. The method of claim 6, further comprising:
encoding, in the projected 2D image (20), a distance from points on the surface of the anatomical structure to corresponding points on the convex closed surface.

8. The method of any one of claims 1-7, wherein the trained 2D image-to-image neural network (35) comprises one of:
a U-net architecture (52); or
a vision transformer architecture (54).

9. The method of any one of claims 1-8, wherein the anatomical structure is a heart (10) and the anatomical substructures comprise coronary vessels.

10. The method of claim 9, wherein projecting the 3D segmentation onto the 2D surface comprises:
projecting the coronary vessels onto a sphere centered on a center of gravity of a pericardium surface; and/or
aligning the projection along an axis defined by an Aortic Valve Center and a Left Ventricle Apex.

11. The method of any one of claims 1-10, wherein the 2D-to-2D image processing neural network has been trained using a dataset comprising projected 2D images derived from 3D segmentations of anatomical substructures and corresponding ground truth labels for the anatomical substructures, wherein the ground truth labels are assigned using a 3D-to-3D image processing neural network, by human labeling, or using a combination of 3D-to-3D image processing neural network labelling and human labeling.

12. The method of any one of claims 1-10, wherein the post-processing step (37) comprises:
applying a consistency post-processing (43) to ensure anatomical coherence of the label set, wherein the consistency post-processing (43) utilizes a ruleset of anatomical interrelationships between the anatomical substructures to determine the label set.

13. A system for labeling anatomical substructures of an anatomical structure in a medical imaging dataset, comprising:
a storage module (62) configured to store a three-dimensional, 3D, segmentation of anatomical substructures in the medical imaging dataset; and
a labeling module (63) configured to:
project the 3D segmentation onto a two-dimensional, 2D, surface to create a projected 2D image (20), wherein the projected 2D image comprises pixels with at least one channel indicating presence of the anatomical substructures;
process the projected 2D image using a trained 2D image-to-image neural network (35) to generate label probabilities for pixels of the projected 2D image corresponding to the anatomical substructures;
project the label probabilities from the pixels of the projected 2D image to voxels of the anatomical substructures in the 3D segmentation; and
determine a label set for the anatomical substructures by applying a post-processing step (37) to the label probabilities.

14. The system of claim 13, further configured to implement the features of any one of the claims 2 - 12.

15. Computer program product comprising instructions that, when executed by a processor, cause the processor to perform a method for labeling anatomical substructures of an anatomical structure in a medical imaging dataset according to any one of the claims 1 - 12.
